# EUROPÄISCHE PATENTSCHRIFT

(11) **EP 1 113 710 B1**
(45) Veröffentlichungstag und Bekanntmachung des Hinweises auf die Patenterteilung: **07.04.2004**
(21) Anmeldenummer: 00125928.2
(22) Anmeldetag: 27.11.2000
(51) Int. Cl.: H05B 41/28

(54) **Eledtronisches Vorschaltgerät zum Betrieb einer Niederdruckentladungslampe**
Electronic ballast for operating a low pressure discharge lamp
Ballast électronique pour alimenter une lampe à décharge basse-pression

(30) Priorität: 27.12.1999 DE 19963282
(43) Veröffentlichungstag der Anmeldung: 04.07.2001
(73) Patentinhaber: TridonicAtco GmbH & Co. KG, 6851 Dornbirn (AT)
(72) Erfinder: Ludorf, Werner, Dr., 6912 Hörbranz (AT)
(74) Vertreter: Schmidt-Evers, Jürgen, Dipl.-Ing.

(56) Entgegenhaltungen:
- EP-A- 0 581 206
- EP-A- 0 621 743
- WO-A-96/07297
- DE-A- 19 725 645
- US-A- 5 144 526

## Beschreibung

Die vorliegende Erfindung betrifft ein elektronisches Vorschaltgerät zum Betrieb einer Niederdruck-Entladungslampe, bei dem das Entstehen von Oberschwingungen vermieden werden soll.

Durch die Verwendung von elektronischen Vorschaltgeräten, welche Leuchtstofflampen mit Strömen im Frequenzbereich über 10 kHz betreiben, kann eine deutliche Verbesserung des Lampenwirkungsgrads erzielt werden. Die Verbesserung entsteht in erster Linie dadurch, daß bei diesen hohen Frequenzen die Elektronendichte im Plasma der Leuchtstofflampe dem Zeitverlauf des Stromes nicht mehr folgen kann und somit bei einem Nulldurchgang der Netzversorgung keine Pausen bis zum Wiederzünden der Lampe entstehen. Gegenüber einem 50 Hz-Betrieb kann somit beim Betrieb einer Lampe mit Frequenzen zwischen 20 und 50 kHz bei gleichbleibendem Lichtstrom eine Reduzierung der aufgenommenen elektrischen Leistung um 8-10% erreicht werden.

Bei der Entwicklung von elektronischen Vorschaltgeräten muß allerdings auch die Umweltverträglichkeit des Gesamt-Systems Vorschaltgerät + Entladungslampe berücksichtigt werden. Insbesondere werden keine Geräte akzeptiert, die lediglich ihre Grundfunktionen erfüllen aber als Störquellen andere Einrichtungen in ihrer Funktion beeinträchtigen. Aus diesem Grund werden bei den Vorschaltgeräten Maßnahmen getroffen, den entnommenen Netzstrom möglichst sinusförmig zu gestalten, da in diesem Fall der Netzstrom nur gering verzerrt wird. Durch die Verzerrungen wiederum werden Oberwellen erzeugt, die im Netz zu Störungen führen können. Die zulässigen Grenzwerte für Oberwellen sind durch die DIN VDE 0712 festgelegt.

Eine Oberschwingungsbegrenzung kann auf verschiedene Weise erreicht werden, beispielsweise durch die als Hochsetzsteller bezeichneten Schaltungen. Beschreibungen derartiger Hochsetzsteller sind in dem Buch *"Betriebsgeräte und Schaltungen für elektrische Lampen* " zu finden. Diese bekannten Schaltungen wurden für die heute gebräuchlichen Vorschaltgeräte entwickelt, welche die Entladungslampen in einem Frequenzbereich zwischen 20 kHz und 50 kHz betreiben.

DE-A-197 25 645 offenbart ein EVG gemäß dem Oberbegriff des Anspruches 1. Dieses bekannte EVG weist also einen mit Netzspannung gespeisten Gleichrichter, einen an den Ausgang des Gleichrichters angeschlossenen Wechselrichter, einen an den Ausgang des Wechselrichters angeschlossenen Lastkreis sowie eine Oberwellen-Reduzierungsschaltung auf

Aus der WO-A-9607297 ist ein DC/AC-Wandler zum Betrieb einer Lampe bekannt. Die Betriebsfrequenz des Wandlers soll dabei 2,65 MHz sein.

Aus der EP 0 581 206 A2 schließlich sind LTCC- (low-temperature-cofired-ceramic) Strukturen bekannt, die beispielsweise in Transformatoren angewendet werden können.

Es ist Aufgabe der vorliegenden Erfindung, alternativ zu den bekannten Vorschaltgeräten mit einer Hochsetzsteller-Schaltung ein elektronisches Vorschaltgerät zum Betrieb von Niederdruck-Entladungslampen anzugeben, bei dem durch eine möglichst einfache Schaltung effektiv die Entstehung von Oberwellen reduziert wird.

Die Aufgabe wird durch ein elektronisches Vorschaltgerät, das die Merkmale des Anspruchs 1 aufweist, gelöst. Die abhängigen Ansprüche bilden den zentralen Gedanken vorteilhaft weiter.

Das EVG besteht aus einem von der Netzspannung gespeisten Gleichrichter, an dessen Ausgang ein Wechselrichter angeschlossen ist. Die von dem Wechselrichter erzeugte hochfrequente Wechselspannung wird einem Lastkreis zugeführt, der einen aus einer Resonanzinduktivität und einer Resonanzkapazität bestehenden Serienresonanzkreis aufweist, wobei die zu betreibende Lampe parallel zu der Resonanzkapazität geschaltet ist. Zum Reduzieren von Oberwellen weist das Vorschaltgerät ferner folgende Elemente auf: eine zwischen den Ausgang des Gleichrichters und den Eingang des Wechselrichters geschaltete Serienschaltung aus zwei in Durchlaßrichtung gepolten Dioden sowie eine zwischen diesen Dioden angeordnete Pumpdrossel, einen parallel zu dem Eingang des Wechselrichters liegenden Speicherkondensator und einen ersten Rückkopplungskondensator, dessen einer Anschluß mit dem Verbindungspunkt der Pumpdrossel und der dem Wechselrichter näher liegenden Diode verbunden ist und dessen anderer Anschluß zwischen die Resonanzkapazität und die Resonanzinduktivität geschaltet ist. Die erfindungsgemäße Schaltung weist somit nur wenige Bauelemente auf, ermöglicht aber dennoch eine effektive Reduzierung von Oberwellen. Vorzugsweise kann zwischen dem Anschlußpunkt des Rückkopplungszweiges und dem Resonanzkondensator noch ein weiterer Koppelkondensator vorgesehen sein.

Ein weiterer Vorteil der erfindungsgemäßen Schaltung ist darin zu sehen, daß diese auch bei sehr hohen Frequenzen noch zuverlässig arbeitet, insbesondere auch bei Frequenzen oberhalb von 1 MHz. Der Wechselrichter wird zum Zünden und im Betrieb bei Frequenzen in einem Bereich zwischen 2,2 MHz und 3,0 MHz betrieben. Mit dieser deutlichen Frequenzerhöhung ist eine nochmalige Erhöhung des Lampenwirkungsgrades möglich. Dabei hat sich gezeigt, daß die Schaltkonzepte der bekannten Oberwellen-Reduzierungsschaltungen nicht ohne weiteres für diese Höchstfrequenzen geeignet sind. Dies insbesondere deswegen, da das Verhalten der nichtlinearen Bauteile (Dioden, Transistoren) bei Frequenzen oberhalb von 1 MHz in derartigen Schaltungen nur schwer vorhersagbar ist. Tatsächlich funktionieren die bekannten Schaltungen in diesem Frequenzbereich nur unzureichend oder überhaupt nicht.

Eine Weiterbildung der erfindungsgemäßen Schaltung kann darin bestehen, daß ein weiterer Rückkopplungskondensator den Ausgang des Wechselrichters mit dem Verbindungspunkt der Pumpdrossel und der dem Wechselrichter näher liegenden Diode verbindet. Durch das Einfügen dieses zweiten Rückkopplungskondensators können kritische Netzstrom-Oberwellenanteile wie die der 3. Oberwelle reduziert werden. Durch eine geeignete Dimensionierung der beiden Rückkopplungskondensatoren kann dabei eine optimale Verteilung der Oberwellenanteile erreicht werden.

Diese Schaltung kann nochmals dadurch verbessert werden, daß der Wechselrichter durch eine Halbbrücke aus zwei in Serie geschalteten Leistungstransistoren gebildet wird, an deren gemeinsamen Mittelabgriff der Lastkreis angeschlossen ist. Die Ansteuerung der beiden Leistungstransistoren kann dann durch einen Ansteuer-Transformator erfolgen, dessen Primärwicklung zwischen den Ausgang des Wechselrichters und dem Anschluß des zusätzlichen Rückkopplungskondensators geschaltet ist und dessen beide Sekundärwicklungen jeweils den Gate-Anschluß mit dem Drain-Anschluß eines Transistors verbinden.

Eine weitere vorteilhafte Weiterbildung der Erfindung ergibt sich aus der Tatsache, daß die Kapazitäts- und Induktivitätswerte der Drosseln und Kondensatoren durch die Erhöhung der Betriebsfrequenz in den Megahertz-Bereich deutlich reduziert werden können. Es ist dann möglich, passive Bauelemente des Vorschaltgerätes in eine Mehrlagenschaltung, bei der es sich beispielsweise um eine LTCC- (Low Temperature Cofired Ceramic) Struktur handeln kann, zu integrieren. Auf diese Weise kann das gesamte elektronische Vorschaltgerät sehr kompakt gestaltet werden.

Insbesondere die Integrierung von Spulen in Form von planaren Induktivitäten und/oder Integrierung von planaren Kapazitäten ermöglicht eine weitere sinnvolle Weiterbildung. Bei der Herstellung eines elektronischen Vorschaltgerätes muß nämlich gewährleistet sein, daß innerhalb eines Toleranzbereiches für alle Bauelemente noch ein Lampenbetrieb bei einer bestimmten Mindestbetriebsspannung und einer bestimmten Höchstbetriebsspannung gewährleistet ist. Dabei kann jedoch der Fall auftreten, daß die Toleranzen sämtlicher Bauelemente in einer Richtung ungünstig sind, so daß entweder die Maximalbedingung oder die Minimalbedingung für die Betriebsspannung nur schwer zu erfüllen ist. Gemäß einer Weiterbildung der Erfindung wird daher vorgeschlagen, in dem Vorschaltgerät enthaltene Spulen in Form von einstellbaren planaren Induktivitäten zu gestalten, deren Windungszahl nachträglich auf einen gewünschten Wert eingestellt werden kann. Dies erfolgt dadurch, daß mehrere der durch Leiterbahnen gebildeten Windungen über Anzapfungs-Leiterbahnen mit einem Ende der planaren Induktivität verbunden sind und diese somit kurzschließen. Diese Anzapfungs-Leiterbahnen können dann nachträglich zum Verändern der effektiven Windungszahl der Induktivität durchtrennt werden, beispielsweise mittels Laserstrahlung.

Auch ein nachträgliches Verändern der Eigenschaften der anderen passiven Bauelemente ist möglich. Geeignet dimensionierte integrierte planare Teil-Kapazitäten können beispielsweise parallel geschaltet werden, um den gewünschten Kapazitätswert eines integrierten Kondensators einzustellen. Die Teilkapazitäten können durch Unterbrechung von Leiterbahnabschnitten an der Substratoberfläche von der Parallelschaltung getrennt werden. Die Feineinstellung der Gesamtkapazität erfolgt, indem die entsprechenden oberflächigen Leiterbahnabschnitte durchtrennt werden, was beispielsweise durch intensive Laserstrahlung erreicht werden kann.

Die Einstellung von Widerstandswerten gedruckter, auf der LTCC-Oberfläche befindlicher Widerstände kann in bekannter Technik mittel Laserstrahlung erfolgen. Die Einstellung der Widerstandswerte von zwischen den LTCC-Schichten integrierten Widerständen kann durch entsprechend große Fenster in den darüber liegenden LTCC-Schichten, die den Durchtritt intensiver Laserstrahlung erlauben, erreicht werden.

Somit sind in dieser Technologie alle integrierten passiven Bauelemente, Widerstände, Induktivitäten und Kapazitäten nach der Komplettbestückung noch während des Funktionstests der gesamten Schaltung einstellbar. Dies erlaubt in diesem späten Fertigungsstadium:
a) eine Realisierung der gewünschten EVG-Leistungsklasse durch Einstellung der passiven Leistungsbauelemente (Lampendrossel, Pumpdrossel, Zünd- bzw-Resonanzkondensator, Halbbrücken- bzw. Koppelkondensator und Rückkoppelkondensatoren) und der gedruckten Widerstände, deren Wert insbesondere auf die Ansteuerung der Schalter und somit auf die Betriebsfrequenz des EVG Einfluß nimmt. Die Einstellung der für die jeweilige Leistungsklasse spezifischen Betriebsfrequenz kann dabei über die passiven integrierten Bauelemente der Ansteuerschaltung eines freischwingenden Wechselrichters oder die periphere passive Bauschaltung eines kundenspezifischen integrierten Schaltkreises (ASIC), der die Leistungstransistoren steuert, erfolgen. und/oder
b) eine Kompensation auftretender Fertigungstoleranzen der passiven integrierten Bauelemente.

Die Erfindung soll im folgenden anhand der beiliegenden Zeichnung näher erläutert werden. Es zeigen:
- Fig. 1: das Funktionsschaltbild eines erfindungsgemäßen elektronischen Vorschaltgerätes;
- Fig. 2: eine Weiterbildung des in Fig. 1 dargestellten Vorschaltgerätes;
- Fig. 3: eine nochmalige Weiterbildung des in Fig. 2 dargestellten Vorschaltgerätes; und
- Fig. 4: ein Ausführungsbeispiel einer nachträglich einstellbaren planaren Induktivität.

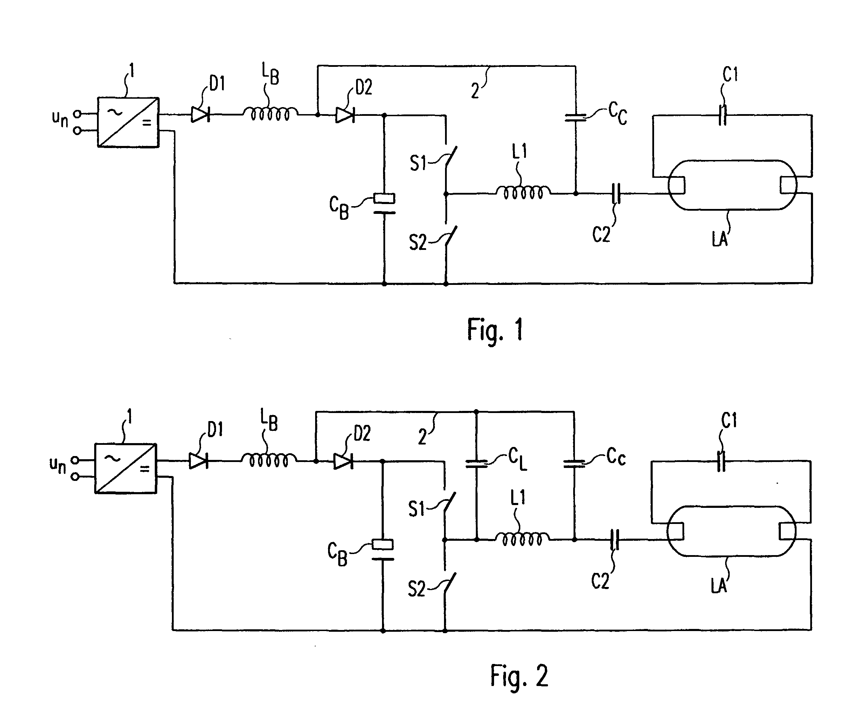

Den mit der Netzwechselspannung uₙ verbundenen Eingang des in Fig. 1 dargestellten Vorschaltgerätes bildet ein Gleichrichter 1, beispielsweise ein Brückengleichrichter oder dgl. Zum Glätten der gleichgerichteten Netzwechselspannung uₙ ist an den positiven Ausgang des Gleichrichters 1 eine Reihenschaltung aus zwei in Durchlaßrichtung gepolten Dioden D1 und D2 mit einer dazwischen angeordneten Pumpdrossel L_{B} angeschlossen. Ferner befindet sich zwischen dieser Reihenschaltung und dem Eingang des Wechselrichters ein Elektrolytkondensator C_{B}, der als Speicherkondensator fungiert.

Der Wechselrichter des Vorschaltgerätes wird durch eine Halbbrücke aus zwei in Serie geschalteten elektronischen Schaltern S1 und S2 gebildet, wobei ein Schalter jeweils aus einem MOS-Feldeffekttransistor bestehen kann. Das Ansteuern dieser beiden Schalter S1 bzw. S2 erfolgt über eine nicht dargestellte Steuerschaltung derart, daß jeweils einer der beiden Schalter S1 oder S2 geöffnet und der andere geschlossen ist. Vorzugsweise liegt die Schaltfrequenz oberhalb von 1 MHz, insbesondere im Bereich zwischen 2,2 und 3,0 MHz.

An den Ausgang des Wechselrichters, d.h. an den gemeinsamen Knotenpunkt der beiden Schalter S1 und S2 ist der die Niederdruck-Entladungslampe LA enthaltende Lastkreis angeschlossen. Dieser besteht aus einem Serienresonanzkreis, der sich aus einer eine Resonanzinduktivität bildenden Drosselspule L1 und einem Resonanzkondensator C1, der zu der Entladungslampe LA parallel geschaltet ist, zusammensetzt. Zwischen der Drosselspule L1 und dem Resonanzkondensator C1 ist ferner ein Koppelkondensator C2 angeordnet. Ein erster Anschlußpunkt eines Rückkopplungszweiges 2 befindet sich zwischen der Drosselspule L1 und dem Koppelkondensator C2. Dieser - einen Rückkopplungskondensator C_{C} enthaltende - Rückkopplungszweig 2 führt zurück zu einem Knotenpunkt zwischen der Pumpdrossel L_{B} und der mit dem Eingang des Wechselrichters verbundenen zweiten Diode D2.

Durch diesen Rückkopplungszweig 2 wird im laufenden Betrieb ein Teil der Wechselspannung von dem Verbindungspunkt zwischen der Drosselspule L1 und dem Koppelkondensator C2 zu dem Verbindungspunkt zwischen der Pumpdrossel L_{B} und der Diode D2 zurückgeführt. Durch diese Rückführung wird erreicht, daß die Spannung an der positiven Seite des Elektrolytkondensators C_{B} so erhöht wird, daß sie höher ist als der Scheitelwert der gleichgerichteten Netzspannung uₙ. Auf diese Weise werden Nachlade-Stromspitzen vermieden und dementsprechend eine weitgehend sinusförmige Stromentnahme aus dem Netz gewährleistet. Dabei wird die Pumpwirkung über den Rückkopplungszweig 2 durch die Pumpdrossel L_{B} unterstützt.

Im Gegensatz zu den bekannten Schaltungen ermöglicht diese relativ einfache Schaltung auch bei Betriebsfrequenzen von ca. 2,65 MHz eine wirksame Unterdrückung der Entstehung von Oberwellen. Für die beiden Dioden D1 und D2 sollten dabei sehr schnell schaltende Bauelemente verwendet werden. Beispielsweise sollte ihre Rückwärts-Erholzeit tᵣᵣ deutlich kleiner sein als 1/10 f_{B}, wobei f_{B} die Betriebsfrequenz des Wechselrichters ist.

Eine Begründung, warum gerade diese Schaltung auch bei Höchstfrequenzen noch zuverlässig funktioniert, kann nicht ohne weiteres gegeben werden, da das Verhalten derartiger Pumpschaltungen im Megahertz-Bereich nicht vorhersagbar ist. Ein Grund könnte allerdings in dem Einfluß der Dioden auf das Betriebsverhalten zu finden sein. So hat sich gezeigt, daß das Verhalten derartiger Schaltungen sehr sensibel von dem Schaltverhalten der in ihnen enthaltenen Dioden abhängt. Allerdings sind die z.Z. handelsüblichen Dioden lediglich ca. 5mal schneller als die in den Vorschaltgeräten mit 20 bis 50 kHz Betriebsfrequenz eingesetzten Dioden. Hier wird jedoch die Betriebsfrequenz zumindest um den Faktor 20 erhöht, so daß auch die schnellsten Dioden den Schaltvorgängen nicht mehr folgen können und die Schaltungen dann nicht mehr ordnungsgemäß funktionieren. Im Gegensatz dazu zeigt sich jedoch das erfindungsgemäße Schaltungskonzept von den Schaltgeschwindigkeiten der Dioden weitgehend unabhängig.

Bei der in Fig. 2 dargestellten Schaltung wurde der Rückkopplungszweig 2 dadurch erweitert, daß ein zusätzlicher Rückkopplungskondensator C_{L} eingefügt wurde, der den Ausgang des Wechselrichters mit dem Verbindungspunkt der Pumpdrossel L_{B} und der dem Wechselrichter näher liegenden Diode D₂ verbindet. Durch das Einfügen dieses zweiten Rückkopplungskondensators C_{L} können kritische Netzstrom-Oberwellenanteile wie die der 3. Oberwelle reduziert werden. Durch eine geeignete Dimensionierung der beiden Rückkopplungskondensatoren C_{C} und C_{L} kann dabei eine optimale Verteilung der Oberwellenanteile erreicht werden.

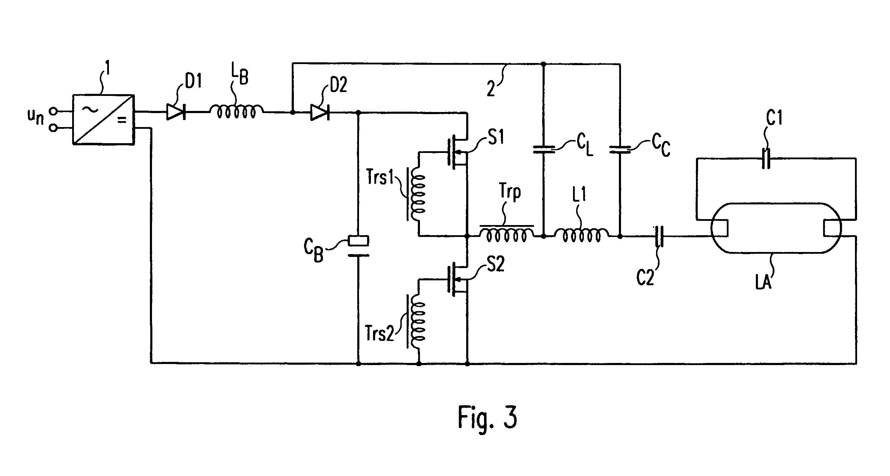

Eine nochmalige Erweiterung ist schließlich in Fig. 3 gezeigt, in der die beiden Schalter des Wechselrichters durch Leistungstransistoren S1 und S2 gebildet werden. Das Ansteuern dieser beiden Leistungstransistoren S1, S2 erfolgt mittels eines Ansteuer-Transformators, dessen Primärwicklung Trp zwischen den Ausgang des Wechselrichters und dem Anschluß des zusätzlichen Rückkopplungskondensators C_{L} geschaltet ist und dessen beide Sekundärwicklungen Trs1 und Trs2 jeweils den Gate-Anschluß mit dem Drain-Anschluß eines Transistors S1 bzw. S2 verbinden.

Wie zuvor erwähnt wurde, können bei diesen hohen Betriebsfrequenzen die Induktivitäts- und Kapazitätswerte der passiven Bauteile des Vorschaltgerätes derart reduziert werden, daß ihre Integrierung in eine Mehrlagenschaltung möglich ist. Insbesondere die in letzter Zeit zunehmend an Bedeutung gewinnenden LTCC-Mehrlagenschaltungen bieten sich dabei für eine Integrierung von Kapazitäten und Induktivitäten an. Die Herstellung derartiger Keramik-Mehrlagenschaltungen ist bekannt und soll hier nur kurz erläutert werden. In eine noch nicht gesinterte Keramikfolie werden zunächst Durchkontaktierungslöcher gestanzt und mit einem leitfähigen Material gefüllt. Anschließend werden auf die Oberfläche Leiterbahnen - vorzugsweise mittels Siebdruck - aufgedruckt. Mehrere dieser Keramikfolien werden anschließend übereinander angeordnet, unter der Zuführung von Druck und Wärme laminiert und anschließend gemeinsam gesintert, so daß sich ein zusammenhängender Keramikverbund mit einem geschlossenen Leiterbahnnetz bildet. Gegenüber den bekannten Leiterplatten-Mehrlagenschaltungen können mit der LTCC-Technik deutlich höhere Leiterbahn-Auflösungen erzielt werden. Ferner können in derartige Schaltungen auch Widerstände, Kapazitäten und Induktivitäten integriert werden.

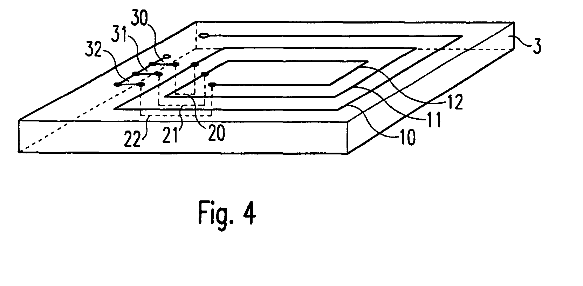

Eine besonders vorteilhafte Ausgestaltung einer derartigen planaren Induktivität ist in Fig. 4 dargestellt. Dabei sind sämtliche Windungen 10-12 in einer gemeinsamen Ebene auf der Oberseite einer Keramikschicht 3 angeordnet. Die Induktivität wird in diesem Fall durch ein spiralen-artiges Leiterbahnmuster gebildet. Jede einzelne Windung 10-12 ist über eine entsprechende Anzapfungs-Leiterbahn 20-22 mit einem Anschluß der Induktivität verbunden. Um Überschneidungen der Anzapfungs-Leiterbahn 20-22 mit den Windungen 10-12 zu vermeiden, verlaufen die Anzapfungs-Leiterbahnen 20-22 auf der Unterseite der Keramikschicht 3, bei Mehrlagenschaltungen dann auf der Oberfläche der nächsten Keramikschicht. Im vorliegenden Beispiel sind zunächst sämtliche Anzapfungs-Leiterbahnen 20-22 durchgängig, was bedeutet, daß die Anzapfungs-Leiterbahn 20 der ersten Windung 10 die beiden anderen Windungen 11 und 12 kurzschließt. Erfindungsgemäß weisen aber alle Anzapfungs-Leiterbahnen 20-22 an der Oberfläche der Keramikschicht 3 verlaufende Abgleich-Abschnitte 30-32 auf, die beispielsweise durch Laserstrahlung in einfacher Weise durchtrennt werden können. Das Durchtrennen des Abgleich-Abschnitts 30 bedeutet, daß die effektive Windungszahl der planaren Induktivität um eine Windung erhöht wird. Somit kann auf einfache Weise die Windungszahl bzw. der davon abhängige Induktivitätswert eingestellt werden. Dabei kann das Durchtrennen der Abgleich-Abschnitte auch auf andere Weise erfolgen, beispielsweise durch Anlegen eines Stromes mit hoher Stromstärke, durch den ein Abgleich-Abschnitt durchgebrannt wird.

Aus Gründen der Übersichtlichkeit sind in Fig. 4 lediglich drei Windungen dargestellt. Es ist jedoch unmittelbar einsichtig, daß auch deutlich höhere Windungszahlen realisiert werden können. Ferner ist es nicht unbedingt notwendig, daß von jeder einzelnen Windung aus eine Anzapfungs-Leiterbahn wegführt. Beispielsweise wäre denkbar, die Windungszahl einer planaren Induktivität in Schritten zu je 5 Windungen zu verändern, also lediglich jeder fünften Windung eine Anzapfungs-Leiterbahn zuzuordnen.

Wird nun beispielsweise die Pumpdrossel L_{B} durch eine solche einstellbare planare Induktivität realisiert, besteht die Möglichkeit, nach dem Herstellen des gesamten Vorschaltgerätes dieses auf einem Prüfstand auf die gewünschten Betriebsparameter einzustellen. Damit ist auch die Möglichkeit gegeben, eventuell auftretende Bauteil-Toleranzen auszugleichen und somit einen effektiven Betrieb auch bei Höchstfrequenzen zu ermöglichen.

Eine weitere Möglichkeit besteht darin, auch die Drosselspule L1 sowie die in Fig. 3 dargestellten Wicklungen Trp, Trs1 und Trs2 des Ansteuer-Transformators in Form von derartigen einstellbaren planaren Induktivitäten zu realisieren. Durch Verändern der Windungszahl der Drosselspule L1 kann dann die Leistung eingestellt werden. Dies bedeutet wiederum, daß für elektronische Vorschaltgeräte unterschiedlicher Leistungen lediglich ein einziger Entwurf erforderlich ist. Die Einstellung, ob das Vorschaltgerät dann beispielsweise 18 W, 36 W oder 58 W Leistungsaufnahme haben soll, kann dann nachträglich auf einem Abgleich- bzw. Prüfstand erfolgen.

In Abhängigkeit von der angestrebten EVG-Leistungsklasse und/oder der Toleranzen der Leistungsbauteile können auch die Windungszahlen der integrierten Primärwicklung Trp und/oder der integrierten Sekundärwicklungen Trs1 und Trs2 beispielsweise durch Unterbrechung oberflächiger Leiterbahnabschnitte variiert werden. Auch hier kann das Durchtrennen dieser Leiterbahnabschnitte mittels abrasiver Laserstrahlung erfolgen. Da das erfindungsgemäße Vorschaltgerät selbstschwingend ist, beeinflussen diese Induktivitäten die Betriebsfrequenz, so daß durch Trimmen dieser planaren Induktivitäten der Arbeitspunkt auf der Resonanzkennlinie eingestellt werden kann.

Wie zuvor erläutert wurde, können allerdings auch anderer passive Bauelemente planar integriert und so ausgebildet werden, daß ein nachträgliches Einstellen ihrer Eigenschaften möglich ist. Insbesondere bietet es sich an, auch die beiden Rückkopplungskondensatoren C_{C} und C_{L} nachträglich abzugleichen um eine optimale Verteilung der Oberwellenanteile zu erreichen.

Somit ist die Möglichkeit gegeben, daß gesamte Vorschaltgerät nachträglich auf eine optimale Arbeitsweise abzustimmen. Dies ist jedoch nur möglich, da durch Ansteuern der Lampe mit den Höchstfrequenzen anstelle diskreter Bauelemente integrierte Bauelemente verwendet werden können. Eine Änderung der Windungszahl einer herkömmlichen gewickelten Spule ist nämlich nur mit relativ großem Aufwand durchzuführen, so daß ein nachträglicher Abgleich eines herkömmlichen Vorschaltgerätes nicht mehr sinnvoll wäre.

## Patentansprüche

1. Elektronisches Vorschaltgerät für mindestens eine Niederdruck-Entladungslampe,
- mit einem von der Netzspannung (uₙ) gespeisten Gleichrichter (1),
- mit einem an den Ausgang des Gleichrichters (1) angeschlossenen Wechselrichter (S1, S2),
- mit einem an den Ausgang des Wechselrichters (S1, S2) angeschlossenen Lastkreis, der einen eine Resonanzinduktivität (L1) und eine Resonanzkapazität (C1) enthaltenden Serienresonanzkreis aufweist, wobei die Lampe (LA) zu der Resonanzkapazität (C1) parallel geschaltet ist,
- sowie mit einer Oberwellen-Reduzierungsschaltung, die aus folgenden Elementen besteht:
a)einer zwischen den Ausgang des Gleichrichters (1) und den Eingang des Wechselrichters (S1, S2) geschalteten Serienschaltung aus zwei in Durchlassrichtung gepolten Dioden (D1, D2) und einer zwischen diesen angeordneten Pumpdrossel (L_{B}),
b)einem parallel zu dem Eingang des Wechselrichters (S1, S2) liegenden Speicherkondensator (C_{B}), und
c) einem Rückkopplungskondensator (C_{C}), dessen einer Anschluss mit dem Verbindungspunkt der Pumpdrossel (L_{B}) und der dem Wechselrichter (S1, S2) näher liegenden Diode (D2) verbunden ist und dessen anderer Anschluss zwischen die Resonanzkapazität (C1) und die Resonanzinduktivität (L1) geschaltet ist,
wobei die Verbindung zwischen der Pumpdrossel (L_{B}) einerseits und dem Eingang des Wechselrichters (S1, S2) andererseits ausschließlich durch eine der beiden in Durchlassrichtung gepolten Dioden (D1, D2) gebildet ist,
**dadurch gekennzeichnet,**
**dass** der Wechselrichter (S1, S2) zum Zünden und im Betrieb bei Frequenzen zwischen 2,2 MHz und 3,0 MHz betrieben wird.

2. Elektronisches Vorschaltgerät nach Anspruch 1,
**dadurch gekennzeichnet**,
zwischen der Resonanzkapazität (C1) und dem Anschluß des Rückkopplungskondensators (C_{C}) ein Koppelkondensator (C2) angeordnet ist.

3. Elektronisches Vorschaltgerät nach einem der Ansprüche 1 oder 2,
**dadurch gekennzeichnet,**
**daß** dieses einen weiteren Rückkopplungskondensator (C_{L}) aufweist, der den Ausgang des Wechselrichters (S1, S2) mit dem Verbindungspunkt der Pumpdrossel (L_{B}) und der dem Wechselrichter (S1, S2) näher liegenden Diode (D2) verbindet.

4. Elektronisches Vorschaltgerät nach einem der vorherigen Ansprüche,
**dadurch gekennzeichnet,**
**daß** der Wechselrichter durch eine Halbbrücke aus zwei in Serie geschalteten Schaltern (S1, S2) gebildet wird, an deren gemeinsamen Mittelabgriff der Lastkreis angeschlossen ist.

5. Elektronisches Vorschaltgerät nach Anspruch 3 und 4,
**dadurch gekennzeichnet,**
**daß** die beiden Schalter des Wechselrichters durch Leistungstransistoren (S1, S2) gebildet werden, deren Ansteuerung durch einen Ansteuer-Transformator erfolgt, dessen Primärwicklung (Trp) zwischen den Ausgang des Wechselrichters und dem Anschluß des zusätzlichen Rückkopplungskondensators (C_{L}) geschaltet ist und dessen zwei Sekundärwicklungen (Trs1, Trs2) jeweils den Gate-Anschluß mit dem Drain-Anschluß eines Leistungstransistors (S1 bzw. S2) verbinden.

6. Elektronisches Vorschaltgerät nach einem der vorherigen Ansprüche,
**dadurch gekennzeichnet,**
**daß** passive Bauelemente (C_{C}, C_{L}, Trp, Trs1, Trs2, C1, C2, L_{B}, L1) und Widerstände des Vorschaltgerätes in eine Mehrlagenschaltung planar integriert sind.

7. Elektronisches Vorschaltgerät nach Anspruch 6,
**dadurch gekennzeichnet,**
**daß** es sich bei der Mehrlagenschaltung um eine LTCC-Struktur handelt, die aus mehreren übereinander angeordneten niedrig sinternden Keramikschichten (3) besteht.

8. Elektronisches Vorschaltgerät nach Anspruch 6 oder 7,
**dadurch gekennzeichnet,**
**daß** zur Einstellung einer EVG-Leistungsklasse und/oder zum Ausgleich von Fertigungstoleranzen die planar integrierten Bauelemente (C_{C}, C_{L}, Trp, Trs1, Trs2, C1, C2, L_{B}, L1 und/oder Widerstände in ihren Parametern nachträglich einstellbar sind.

9. Elektronisches Vorschaltgerät nach Anspruch 8,
**dadurch gekennzeichnet,**
**daß** das Verändern der Parameter der planar integrierten Bauelemente mittels Durchtrennen von oberflächigen Leiterbahnabschnitten (20-22) erfolgt.

10. Elektronisches Vorschaltgerät nach Anspruch 9,
**dadurch gekennzeichnet,**
**daß** das Durchtrennen der oberflächigen Leiterbahnabschnitte (20-22) mittels Laserstrahlung erfolgt.

11. Elektronisches Vorschaltgerät nach Anspruch 9 oder 10,
**dadurch gekennzeichnet,**
**daß** bei planar integrierten Induktivitäten mehrere durch gedruckte Leiterbahnen gebildete Windungen (10 - 12) über Anzapfungs-Leiterbahnen (20 - 22) mit einem gemeinsamen Endanschluß der planaren Induktivität verbunden sind, die zum Verändern der Induktivität durchtrennbar sind.

12. Elektronisches Vorschaltgerät nach Anspruch 5 und einem der Ansprüche 8 bis 11,
**dadurch gekennzeichnet,**
**daß** insbesondere die Wicklungen (Trp, Trs1, Trs2) des Ansteuer-Transformators zum Ansteuern der Leistungstransistoren (S1, S2) planar integriert und einstellbar sind.

## Revendications

1. Ballast électronique destiné à au moins une lampe à décharge basse tension, lequel ballast comporte
- un redresseur (1) alimentée par la tension (uₙ) du réseau,
- un onduleur (S1, S2) raccordé à la sortie du redresseur (1),
- un circuit de charge qui est raccordée à la sortie de l'onduleur (S1, S2) et qui comporte un circuit résonant série contenant une bobine d'induction à résonance (L1) et un condensateur à résonance (C1), la lampe (LA) étant montée en parallèle avec le condensateur à résonance (C1),
ainsi qu'un circuit de réduction des harmoniques qui se compose des éléments suivants :
a) un circuit série qui est monté entre la sortie du redresseur (1) et l'entrée de l'onduleur (S1, S2) et qui est constitué par deux diodes (D1, D2) polarisées en direct et une bobine de pompage (LB) placée entre ces diodes,
b) un condensateur de puissance (C_{B}) monté en parallèle avec l'entrée de l'onduleur (S1, S2), et
c) un condensateur de rétroaction (C_{C}) dont une borne est reliée au point de liaison de la bobine de pompage (LB) et de la diode (D2) située près de l'onduleur (S1, S2) et dont l'autre borne est montée entre le condensateur à résonance (C1) et la bobine d'inductance à résonance (L1),
la liaison entre la bobine de pompage (L_{B}) d'une part et l'entrée de l'onduleur (S1, S2) d'autre part est formée exclusivement par l'une des deux diodes (D1, D2) polarisées en direct,
**caractérisé en ce que** l'onduleur (S1, S2) est destiné à effectuer l'allumage et est utilisé, en fonctionnement, à des fréquences comprises entre 2,2 MHz et 3,0 MHz.

2. Ballast électronique selon la revendication 1, **caractérisé en ce qu'**un condensateur de couplage (C2) est placé entre le condensateur à résonance (C1) et la borne du condensateur de rétroaction (CC).

3. Ballast électronique selon l'une des revendications 1 ou 2, **caractérisé en ce que** celui-ci comporte un autre condensateur de rétroaction (C_{L}) qui relie la sortie de l'onduleur (S1, S2) au point de liaison de la bobine de pompage (L_{B}) et de la diode (D2) située près de l'onduleur (S1, S2).

4. Ballast électronique selon l'une des revendications précédentes, **caractérisé en ce que** l'onduleur est formé par un demi-pont constitué de deux commutateurs (S1, S2) qui sont montés en série et dont le point de jonction commun est raccordé au circuit de charge.

5. Ballast électronique selon les revendications 3 et 4, **caractérisé en ce que** les deux commutateurs de l'onduleur sont formés par des transistors de puissance (S1, S2) qui sont contrôlés par un transformateur de contrôle dont l'enroulement primaire (Trp) est monté entre la sortie de l'onduleur et la borne du condensateur de rétroaction supplémentaire (C_{L}) et dont les deux enroulements secondaires (Trs1, Trs2) relient chacun la borne formant grille à la borne formant drain d'un transistor de puissance (S1 resp. S2).

6. Ballast électronique selon l'une des revendications précédentes, **caractérisé en ce que** des composants passifs (C_{C}, C_{L}, Trp, Trs1, Trs2, C1, C2, L_{B}, L1) et les résistances du ballast sont intégrés dans un circuit multicouche par une technique planaire.

7. Ballast électronique selon la revendication 6, **caractérisé en ce que** le circuit multicouche est une structure LTCC qui se compose de plusieurs couches de céramique (3) faiblement frittées et placées l'une au-dessus de l'autre.

8. Ballast électronique selon la revendication 6 ou 7, **caractérisé en ce que** les paramètres des composants (C_{C}, C_{L}, Trp, Trs1, Trs2, C1, C2, L_{B}, L1) et/ou les résistances intégrés par une technique planaire peuvent être réglés ultérieurement en vue de régler une classe de puissance du ballast électronique et/ou de compenser les tolérances de fabrication.

9. Ballast électronique selon la revendication 8, **caractérisé en ce que** la modification des paramètres des composants intégrés par une technique planaire est effectuée en coupant des portions de pistes conductrices en surface (20 à 22).

10. Ballast électronique selon la revendication 9, **caractérisé en ce que** les portions de pistes conductrices en surface (20 à 22) sont coupées au moyen d'un faisceau laser.

11. Ballast électronique selon la revendication 9 ou 10, **caractérisé en ce que**, dans le cas de bobines d'inductance intégrées par une technique planaire, plusieurs enroulements (10 à 12) formés par des pistes conductrices imprimées sont reliés à une borne d'extrémité commune de la bobine d'inductance planaire via des pistes conductrices de branchement (20 à 22) qui peuvent être coupées en vue de modifier l'inductance.

12. Ballast électronique selon la revendication 5 et l'une des revendications 8 à 11, **caractérisé en ce que** en particulier les enroulements (Trp, Trs1, Trs2) du transformateur de contrôle destiné à contrôler les transistors de puissance (S1, S2) sont intégrés par une technique planaire un et sont réglables.

## Claims

1. Electronic ballast for at least one low pressure discharge lamp,
- having a rectifier (1) fed from the mains voltage (uₙ),
- having an inverter (S1, S2) connected to the output of the rectifier (1),
- having a load circuit, connected to the output of the inverter (S1, S2), which has a series resonance circuit containing a resonance inductance (L1) and a resonance capacitance (C1), the lamp (LA) being connected parallel to the resonance capacitance (C1),
- and having a harmonics reduction circuit which is of the following elements:
a) a series circuit of two diodes (D1, D2) poled in forward direction and a pump choke (L_{B}) arranged between these, connected between the output of the rectifier (1) and the input of the inverter (S1, S2),
b) a storage capacitor (C_{B}) lying parallel to the input of the inverter (S1, S2), and
c) a feedback capacitor (C_{C}), the one terminal of which is connected with the connection point of the pump choke (L_{B}) and the diode (D2) lying closer to the inverter (S1, S2), and the other terminal of which is connected between the resonance capacitance (C1) and the resonance inductance (L1),
wherein the connection between the pump choke (L_{B}) on the one hand and the input of the inverter (S1, S2) on the other hand is constituted exclusively by one of the two diodes (D1, D2) poled in forward direction,
**characterised in that**
for ignition and in operation the inverter (S1, S2) is operated at frequencies between 2.2 MHz and 3.0 MHz.

2. Electronic ballast according to claim 1,
**characterised in that**,
a coupling capacitor (C2) is arranged between the resonance capacitance (C1) and the terminal of the feedback capacitor (C_{C}).

3. Electronic ballast according to any of claims 1 or 2,
**characterised in that**,
this has a further feedback capacitor (C_{L}) which connects the output of the inverter (S1, S2) with the connection point of the pump choke (L_{B}) and the diode (D2) lying closer to the inverter (S1, S2).

4. Electronic ballast according to any preceding claim,
**characterised in that**,
the inverter is formed by means of a half-bridge of two switches (S1, S2) connected in series, to the common middle tap of which the load circuit is connected.

5. Electronic ballast according to claim 3 and 4,
**characterised in that**,
the two switches of the inverter are formed by power transistors (S1, S2) the control of which is effected by means of a control transformer the primary winding (Trp) of which is connected between the output of the inverter and the terminal of the additional feedback capacitor (C_{L}) and the two secondary windings (Trs1, Trs2) of which in each case connect the gate terminal with the drain terminal of a power transistor (S1 or S2).

6. Electronic ballast according to any preceding claim,
**characterised in that**,
the passive components (C_{C}, C_{L}, Trp, Trs1, Trs2, C1, C2, L_{B}, L1) and resistors of the ballast are integrated in a planar manner in a multi-layer circuit.

7. Electronic ballast according to claim 6,
**characterised in that**,
the multi-layer circuit is a LTCC structure which is of a plurality of low temperature sintering ceramic layers (3) arranged above one another.

8. Electronic ballast according to claim 6 or 7,
**characterised in that**,
for setting an electronic ballast power class and/or for compensating production tolerances, the planar integrated components (C_{C}, C_{L}, Trp, Trs1, Trs2, C1, C2, L_{B}, L1) and/or resistors can be retrospectively set in their parameters.

9. Electronic ballast according to claim 8,
**characterised in that**,
the alteration of the parameters of the planar integrated components is effected by means of severing of surface conductor path sections (20-22).

10. Electronic ballast according to claim 9,
**characterised in that**,
the severing of the surface conductor path sections (20-22) is effected by means of laser radiation.

11. Electronic ballast according to claim 9 or 10,
**characterised in that**,
in the case of planar integrated inductances a plurality of windings (10-11) formed by printed conductor paths are connected via tapping conductor paths (20-22) with a common end terminal of the planar inductance, which conductor paths can be severed for altering the inductance.

12. Electronic ballast according to claim 5 and any of claims 8 to 11,
**characterised in that**,
in particular the windings (Trp, Trs1, Trs2) of the control transformer, for controlling the power transistors (S1, S2), are planar integrated and settable.
